# FASCICULE DE BREVET EUROPEEN

(11) **EP 0 841 475 B1**
(45) Date de publication et mention de la délivrance du brevet: **10.07.2002**
(21) Numéro de dépôt: 97402607.2
(22) Date de dépôt: 31.10.1997
(51) Int. Cl.: F01N 3/02, F01N 9/00, B01D 46/24

(54) **Procédé et unité de filtration de gaz d'échappement ayant un chauffage modulable**
Verfahren und Filtrationseinheit für Abgase mit verstellbarer Heizung
Process and unit for the filtration of exhaust gases with adjustable heating

(30) Priorité: 12.11.1996 FR 9613855
(43) Date de publication de la demande: 13.05.1998
(73) Titulaire: INSTITUT FRANCAIS DU PETROLE, 92852 Rueil-Malmaison Cedex (FR)
(72) Inventeur: Dementhon, Jean-Baptiste, 75011 Paris (FR); Martin, Brigitte, 69230 Saint-Genis Laval (FR); Pajot, Olivier, 78100 Saint-Germain-en-Laye (FR)

(56) Documents cités:
- EP-A- 0 270 990
- EP-A- 0 504 422
- DE-A- 4 012 719
- US-A- 5 024 054
- US-A- 5 454 845
- US-A- 5 457 945

## Description

La présente invention concerne le post-traitement des gaz émis à l'échappement de véhicules Diesel.

Des normes sur les émissions de particules sont apparues récemment en Europe. Ces normes se sévériseront encore dans les prochaines années. A cet horizon, les améliorations liées aux moteurs et aux carburants peuvent être insuffisantes, même en présence d'un pot catalytique d'oxydation, efficace surtout pour la partie soluble des particules émises.

Une technique connue de post-traitement des gaz d'échappement est le filtre à particules. Il est ainsi possible d'obtenir des efficacités de filtration supérieures à 80%. De nombreuses technologies de filtre ont été développées à ce jour. A titre illustratif, peuvent être cités le monolithe céramique commercialisé par la Société Corning, ou encore la cartouche à fibres céramiques enroulées telle que décrite dans la demande de brevet WO-95/27.843.

La difficulté technique rencontrée pour le développement d'un tel système est que le filtre doit être périodiquement régénéré par combustion du dépôt de suies. Cette combustion se produit parfois naturellement lorsque la température des gaz atteint d'elle-même le niveau requis pour initier l'oxydation des particules. Cependant, les conditions de fonctionnement moyennes aboutissent généralement à des températures trop faibles pour initier spontanément la combustion des particules. Ceci conduit alors à un colmatage du filtre, ce qui est pénalisant pour le bon rendement du moteur, et menace à terme son fonctionnement. Il est alors nécessaire d'assurer artificiellement la régénération du filtre.

De nombreuses techniques ont été développées dans ce sens. Elles peuvent être basées sur des modifications du fonctionnement moteur : vannage à l'admission, vannage à l'échappement, retard de l'avance à l'injection, ou encore liées à un apport d'énergie dans les gaz d'échappement ou au niveau du filtre (résistance électrique, brûleur, micro-ondes...). Il est alors nécessaire de piloter ces différents dispositifs par une commande extérieure prise en charge par un calculateur. Le plus souvent, le critère retenu pour le déclenchement de la régénération est la contre-pression dans la ligne d'échappement.

Pour faciliter la régénération des filtres à particules, une approche différente, de nature chimique consiste à ajouter au carburant un additif par exemple organométallique, qui se retrouve dans le dépôt de suies ce qui conduit généralement à une baisse de la température d'allumage et donc à une augmentation de la fréquence de régénération.

Parmi les produits le plus fréquemment utilisé comme additifs, on peut citer le cuivre, le fer, le cérium, le sodium.... Des études montrent qu'en présence de tels additifs, des régénérations partielles peuvent survenir spontanément pour des températures de gaz d'échappement relativement faibles (~ 200°C).

Néanmoins, pour certains types de conduite, des problèmes liés à la contre-pression peuvent subsister de sorte qu'un apport extérieur d'énergie peut s'avérer nécessaire, comme par exemple le recours au chauffage électrique.

Il est également connu par le document US 5 454 845 une unité de filtration qui comprend un ensemble de filtration avec au moins un élément de filtration, un élément résistif destiné à chauffer une zone d'un élément de filtration et un moyen de détermination de l'encrassement de l'ensemble de filtration.

Une telle unité a pour inconvénient majeur de réaliser un chauffage global de l'élément filtrant. Ceci entraîne une forte consommation d'énergie, plus ou moins maîtrisée. Généralement la puissance électrique nécessaire pour déclencher une régénération totale du filtre est importante et souvent difficilement compatible avec les ressources électriques embarquées sur le véhicule. Le brevet EP-B1-0.485.179 illustre encore un système basé sur ce principe.

Par ailleurs, les conditions de la régénération peuvent être fortement dépendantes de l'état d'encrassement du filtre. Les moyens connus de chauffage électrique ne permettent pas d'agir en fonction de l'encrassement du filtre. De façon avantageuse, la présente invention permet d'adapter la puissance électrique et la répartition d'énergie dans le filtre à toutes les conditions de fonctionnement du véhicule. Elle permet en outre de pallier les problèmes de l'art antérieur évoqués ci-avant.

Autrement dit, la présente invention a pour effet global de mieux maîtriser la contre-pression moyenne à l'échappement et donc de limiter la dégradation du rendement moteur. De façon avantageuse, la présente invention permet de minimiser l'apport d'énergie nécessaire à la régénération dudit filtre, en tenant compte simultanément de plusieurs paramètres ainsi que du "passé" de l'élément de filtration.

En d'autres termes, la présente invention permet d'améliorer le fonctionnement d'un filtre à particules, à la fois sur le plan de l'économie d'énergie et sur celui de la fiabilité.

En outre, grâce à une gestion intelligente de la régénération, la présente invention limite les risques de dégradation de l'élément filtrant liés aux dégagements excessifs de chaleur.

Ainsi, l'invention a pour objet une unité de filtration destinée au post-traitement des gaz émis à l'échappement de moteurs diesel comprenant un ensemble de filtration.

Selon l'invention, l'unité de filtration comprend :
- un moyen de contrôle destiné à commander indépendamment chacune desdites résistances, selon l'encrassement de l'ensemble de filtration;
- un moyen destiné à déterminer la puissance disponible, ledit moyen étant associé au moyen de contrôle.

De façon particulière, le ou lesdits éléments résistifs présentent la forme de spires chacune enroulée autour d'une zone d'un élément de filtration.

Avantageusement, chaque élément résistif présente une faible puissance vis-à-vis de la puissance électrique totale disponible.

L'unité de filtration selon l'invention peut en outre comprendre au moins un capteur de température.

L'unité de filtration selon l'invention peut par ailleurs comprendre au moins un moyen de vannage associé à un élément de filtration.

Par ailleurs, l'unité selon l'invention peut comprendre un moyen de détection de la position de la pédale d'accélération, associé au moyen de contrôle.

Selon un autre de ses aspects, l'invention concerne un procédé de mise en oeuvre d'une telle unité de filtration.

Plus particulièrement, ledit procédé consiste essentiellement à :
- diviser l'ensemble de filtration en plusieurs éléments de filtration;
- équiper l'un au moins des éléments de filtration d'au moins un élément résistif destiné à assurer un chauffage local dudit élément de filtration;
- détecter l'encrassement de l'ensemble de filtration;
et se caractérise pas le fait qu'il consiste à
- évaluer les ressources électriques disponibles dans le véhicule.
- activer sélectivement le ou les éléments résistifs en fonction notamment de l'encrassement détecté et de la puissance électrique, grâce à un moyen de contrôle.

Ainsi selon le mode de réalisation le plus simple de l'invention, une seule zone de l'ensemble de filtration peut être chauffée, par exemple lorsque la contre-pression atteint un seuil critique.

Conformément à un autre mode de réalisation de l'invention, les différentes zones sont chauffées l'une après l'autre.

En outre, le procédé peut consister à détecter la température en différents points de l'ensemble de filtration.

Selon un autre mode de réalisation de l'invention, on chauffe la ou les zones les plus froides de l'ensemble de filtration.

Selon une autre stratégie de l'invention, on chauffe la ou les zones les plus chaudes de l'ensemble de filtration.

En outre, on peut associer selon l'invention, à l'un au moins desdits éléments de filtration, un moyen de vannage afin d'isoler ledit élément.

Plus spécifiquement, le chauffage peut être opéré sur une zone de filtration où l'encrassement est plus important que dans les autres zones, c'est-à-dire plus favorable à la régénération.

Selon une autre stratégie, le chauffage peut être opéré sur une zone de filtration où la nature des suies est plus favorable à la régénération.

Selon une caractéristique intéressante de l'invention, on active sélectivement le ou les éléments résistifs en fonction de certaines conditions de fonctionnement du moteur telles que par exemple la position de la pédale d'accélération.

Ainsi, les avantages et caractéristiques de l'invention résident d'une part dans la division de la résistance électrique totale en plusieurs zones chacune alimentable séparément. D'autre part les stratégies mises en oeuvre selon l'invention sont spécifiquement adaptées aux conditions de fonctionnement du moteur, au mode de conduite, aux ressources en énergie disponibles, aux caractéristiques d'encrassement de l'ensemble de filtration.

D'autres caractéristiques, avantages, détails de la présente invention apparaîtront mieux à la lecture de la description qui va suivre, faite à titre illustratif et nullement limitatif, en référence aux dessins annexés sur lesquels :
- la figure 1 est un schéma de principe d'une unité selon l'invention;
- la figure 2 est un schéma détaillé d'un élément de filtration conforme à l'invention; et
- la figure 3 est un ensemble de courbes montrant la relation entre l'ouverture d'une vanne, la puissance électrique mise en oeuvre et la température dans l'ensemble de filtration.

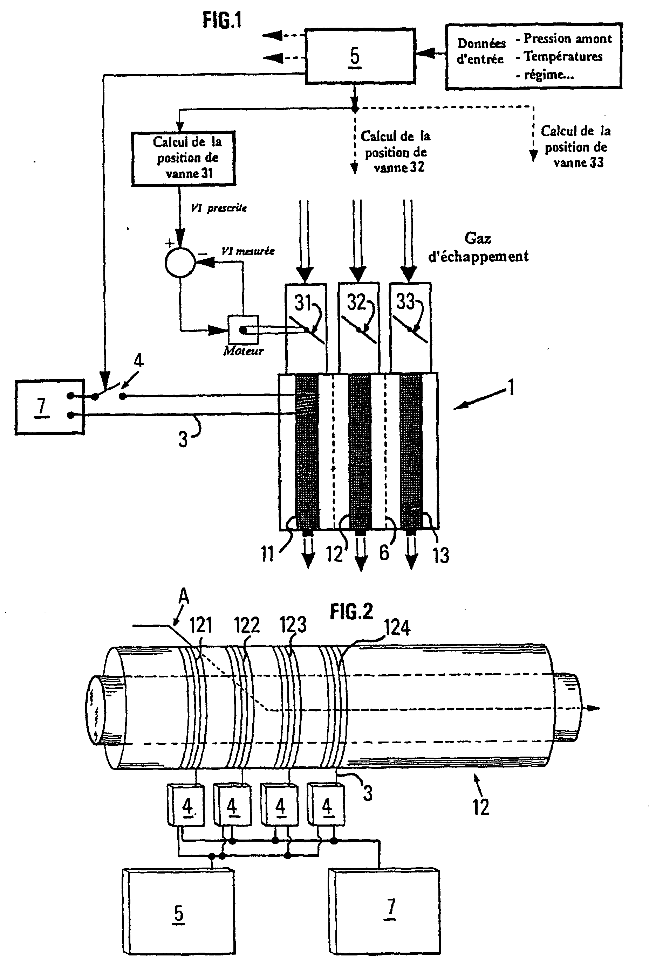

Sur la figure 1 un ensemble de filtration 1 couramment appelé filtre à particules est placé sur le trajet des gaz d'échappement dont l'écoulement est symbolisé par des doubles flèches. L'ensemble de filtration 1 comprend plusieurs éléments de filtration 11, 12, 13, constitués par exemple par des cartouches filtrantes commercialisées par la société américaine 3M.

Des moyens tels que des cloisons 6 peuvent être prévus pour diviser l'ensemble de filtration 1 et isoler les différents éléments de filtration 11, 12, 13.

Un élément de filtration 12 est représenté sur la figure 2. Cet élément est ici équipé de plusieurs éléments résistifs 3 chacun chauffant une zone 121, 122, 123, 124 de l'élément de filtration 12. Plus précisément, la résistance électrique se présente ici sous la forme d'un fil spiralé enroulé autour d'une cartouche filtrante 12.

Selon le mode de réalisation le plus simple, un unique fil résistif 3 est enroulé autour d'une zone 121 d'un élément de filtration tel que 12.

Sans sortir du cadre de l'invention, on peut aussi envisager d'équiper une unique zone dans chaque élément de filtration.

La figure 2, qui sera commentée ci-après, permet de décrire d'une façon plus détaillée l'un des agencements possibles de ces éléments.

Les différents éléments résistifs sont alimentés par une source d'énergie embarquée telle que la batterie ou l'alternateur 7 du véhicule.

Des relais 4 ou autres moyens autorisent ou non le passage de l'énergie vers chacun des différents éléments résistifs 3 ; la commande des relais 4 est assurée par un moyen tel qu'un calculateur électronique 5, selon différentes stratégies expliquées ci-après.

La répartition des différentes résistances électriques 3 sur chaque élément de filtration 11, 12, 13, et entre les différents éléments de filtration, est judicieusement réalisée afin de satisfaire au mieux les stratégies mises en oeuvre. Autrement dit, les éléments de filtration ne sont pas forcément tous équipés du même nombre de résistances chauffantes 3.

En outre, et de façon optionnelle, un ou plusieurs moyens de vannage 31, 32, 33 peuvent coopérer avec l'ensemble de filtration qui vient d'être décrit. Ces vannes permettent d'améliorer la régénération notamment au plan de la consommation en énergie comme il sera explicité ci-après. Au moins un moyen de vannage 31, 32, 33 est associé à un élément de filtration 11, 12, 13.

Par ailleurs, différents capteurs (non représentés sur la figure 1) fournissent les données d'entrées au calculateur 5. Au minimum, un capteur de pression situé en amont de l'ensemble de filtration est nécessaire pour déterminer le niveau d'encrassement de l'ensemble de filtration.

La figure 2 consiste en un schéma simplifié d'un élément de filtration selon l'invention tel qu'une cartouche filtrante 12. Les gaz d'échappement à traiter traversent la cartouche comme indiqué par la flèche A. Le nombre total de cartouches placées dans l'ensemble de filtration 1 est adapté au débit maximal des gaz d'échappement à traiter.

Par ailleurs pour certaines stratégies, on a recours à d'autres capteurs (non référencés, non représentés) comme un capteur de température, un moyen de détermination du débit massique, tel qu'un débitmètre à film chaud, par exemple.

Sur une cartouche individuelle 12 telle que schématisée sur la figure 2. un nombre N de fils chauffants peut être implantés pour chauffer les différentes zones 121, 122, 123, 124 de la cartouche 12. Selon ce mode de réalisation de l'invention, nullement limitatif, quatre fils chauffants sont enroulés indépendamment les uns des autres, sur une partie de la longueur de la cartouche. Le nombre de résistances et la longueur de cartouche recouverte par les résistances sont adaptés aux stratégies définies.

Les fils chauffants peuvent être par exemple des fils commercialisés par la société Thermocoax.

L'alternateur du véhicule peut constituer la source d'énergie des éléments résistifs 3 qui, individuellement, consomment peu d'énergie. La distribution d'énergie doit rester compatible avec les ressources instantanées de ladite source d'énergie, et avec des exigences liées à la limitation de la consommation. Un relais de puissance 4 est associé à chaque élément résistif 3. Chaque relais 4 est commandé par le calculateur 5 en fonction de stratégies prédéterminées qui tiennent compte notamment des conditions de fonctionnement du moteur et de l'encrassement de l'ensemble de filtration. Ces stratégies sont mémorisées dans le calculateur 5. La définition des stratégies doit permettre le maintien de l'encrassement en-dessous d'un certain seuil, d'une part afin de limiter la contre-pression vue par le moteur, d'autre part pour éviter toute accumulation locale de matière susceptible à terme de provoquer une dégradation prématurée du filtre.

Une première mise en oeuvre de l'invention consiste à activer une seule résistance, dès que la contre-pression dépasse un seuil critique afin d'abaisser la contre-pression imposée au moteur avec un minimum d'énergie.

Puis, selon la stratégie adoptée, d'autres résistances peuvent être activées, ensemble ou séparément.

Une autre façon d'activer les différentes résistances localement implantées peut consister à ne chauffer que les zones du filtre 1 où la température reste inférieure à une valeur donnée qui correspond normalement à un début de régénération.

Cette stratégie est particulièrement intéressante lorsqu'on sait que dans le cas de filtre de grandes dimensions, les températures dans les zones du filtre les plus éloignées du moteur peuvent être 50 °C inférieures aux températures à l'entrée du filtre. Dans ce cas, un chauffage ponctuel des zones les moins chaudes permet de favoriser la combustion sur l'ensemble du filtre puisqu'une régénération "spontanée" a alors lieu dans les zones du filtre les plus proches du moteur tandis qu'une régénération "provoquée" apparaît dans les zones périphériques du filtre.

Un tel chauffage partiel permet par ailleurs de favoriser la propagation de la régénération. En effet, si la régénération démarre préférentiellement dans une région du filtre, le débit à travers cette région augmente alors subitement. Ceci prive les autres régions d'oxygène, y rendant la combustion plus difficile et créant ainsi des hétérogénéité d'encrassement. L'existence de zones fortement encrassées, où la combustion peut provoquer des dégagements thermiques importants, est préjudiciable à la durée de vie du filtre. Ce phénomène peut donc être évité par un chauffage local selon l'invention.

Conformément à un autre de ses aspects, la présente invention permet d'activer la ou les résistances associées aux zones les plus chaudes, là ou la température est proche de la température déclenchant la régénération. Une très faible puissance électrique permet alors d'initier la combustion, grâce à un nombre limité de résistances. Ainsi, la chaleur dégagée par la combustion dans les zones réchauffées sert à initier la combustion dans les zones avoisinantes.

Sans sortir du cadre de l'invention, il est envisageable de combiner un chauffage partiel d'une zone (121) d'un élément de filtration (11) avec un vannage également partiel dudit élément.

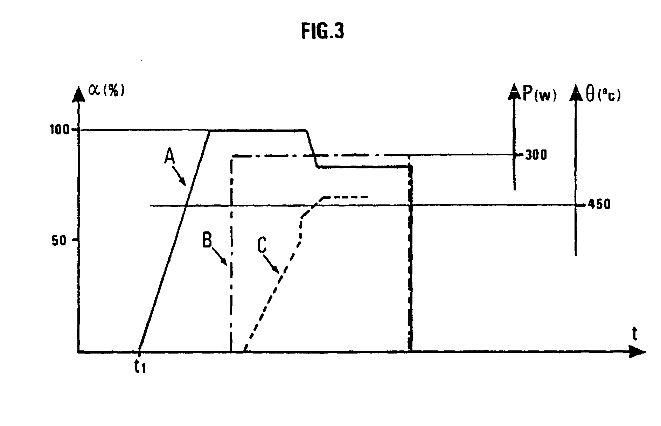

Ce type de fonctionnement est illustré par la figure 3. Sur cette figure, la courbe A (en trait plein) représente l'angle α de fermeture d'une vanne 31, 32, 33 ; la courbe B (en traits mixtes) représente la puissance électrique nécessaire au chauffage et la courbe C (en pointillées) concerne la température dans l'élément vanné. Au temps t₁ a lieu le déclenchement de la régénération. La vanne commence alors à se fermer progressivement et on chauffe simultanément l'élément vanné.

La fermeture de la vanne et le chauffage étant réalisés quasi simultanément, il y a synergie entre les deux opérations, l'effet de la fermeture de la vanne renforçant l'effet du chauffage.

Dès que la combustion a commencé dans la zone en question, on ouvre à nouveau progressivement la vanne puisque l'effet attendu est alors bien réalisé. Cette solution permet de régénérer en économisant de l'énergie.

Conformément à un autre mode de réalisation de l'invention, l'ensemble des vannes peut être piloté de façon à créer une hétérogénéité d'encrassement, tant par la quantité que par la nature des suies déposées, entre les différents éléments de filtration. On choisira alors de chauffer préférentiellement les zones d'un élément filtrant présentant les meilleures chances de régénération (encrassement plus fort, suies plus riches en hydrocarbures). La puissance électrique nécessaire à la régénération sera alors faible puisque on aura un faible débit de gaz à réchauffer et des conditions de combustion favorables.

La demande de brevet français EN. 96/11292 déposée au nom de la demanderesse expose une stratégie permettant de créer des hétérogénéités.

Enfin selon une autre possibilité de fonctionnement de l'invention, la puissance totale consommée pour la régénération pourra être déterminée en fonction des ressources électriques disponibles. En particulier, il pourra être tenu compte du régime moteur pour évaluer les capacités de l'alternateur, ou de la tension batterie, ou de toute autre information disponible susceptible d'être reliée à la puissance électrique disponible, comme par exemple un diagnostic sur les autres utilitaires en fonctionnement au moment de la régénération.

Il est encore possible, selon l'invention, d'activer sélectivement le ou les éléments résistifs en fonction de certaines conditions de fonctionnement du moteur, telles que par exemple la position de la pédale d'accélération. Lorsque la pédale d'accélération est en position maximale, c'est-à-dire lorsque le conducteur demande une puissance moteur maximale, alors les éléments résistifs sont automatiquement désactivés afin de ne pas puiser trop d'énergie et de réserver la puissance maximale pour le moteur.

## Revendications

1. Unité de filtration destinée au post-traitement des gaz émis à l'échappement de moteurs diesel comprenant un ensemble de filtration (1), comprenant :
- au moins un élément de filtration (11, 12, 13);
- au moins un élément résistif (3) destiné à chauffer une zone (121, 122, 123) d'un élément de filtration;
- un moyen de détermination de l'encrassement dudit ensemble de filtration (1);
**caractérisée en ce qu'**elle comprend :
- un moyen de contrôle (5) destiné à commander indépendamment chacun desdits éléments résistifs, selon l'encrassement de l'ensemble de filtration (1);
- un moyen destiné à déterminer la puissance disponible, ledit moyen étant associé au moyen de contrôle (5).

2. Unité de filtration selon la revendication 1, **caractérisé en ce que** le ou les éléments résistifs (3) présentent la forme de spires chacune enroulée autour d'une zone (121, 122...) d'un élément de filtration (11, 12, 13).

3. Unité de filtration selon l'une quelconque des revendications précédentes, **caractérisée en ce que** chaque élément résistif présente une faible puissance vis-à-vis de la puissance électrique totale disponible.

4. Unité de filtration, selon l'une quelconque des revendications précédentes, **caractérisée en ce qu'**elle comprend en outre au moins un capteur de température.

5. Unité de filtration selon l'une quelconque des revendications précédentes, **caractérisée en ce qu'**elle comprend en outre au moins un moyen de vannage (31, 32, 33) associé à un élément de filtration (11, 12, 13).

6. Unité de filtration selon l'une quelconque des revendications précédentes, **caractérisée en ce qu'**elle comprend en outre un moyen de détection de la position de la pédale d'accélération, associé au moyen de contrôle (5).

7. Procédé de mise en oeuvre d'une unité de filtration destinée au post traitement des gaz émis à l'échappement de moteurs diesel comprenant un ensemble de filtration, ledit procédé consistant à
- diviser l'ensemble de filtration en plusieurs éléments de filtration (11, 12, 13);
- équiper l'un au moins des éléments de filtration (11, 12, 13) d'au moins un élément résistif (3) destiné à assurer un chauffage local dudit élément de filtration;
- détecter l'encrassement de l'ensemble de filtration (1);
**caractérisé en ce qu'**il consiste à
- évaluer les ressources électriques disponibles dans le véhicule;
- activer sélectivement le ou les éléments résistifs en fonction notamment de l'encrassement détecté et de la puissance électrique, grâce à un moyen de contrôle.

8. Procédé de mise en oeuvre selon la revendication 7, **caractérisé en ce que** les différentes zones sont chauffées l'une après l'autre.

9. Procédé selon l'une quelconque des revendications 7 ou 8, **caractérisé en ce qu'**il consiste en outre à détecter la température en différents points de l'ensemble de filtration (1).

10. Procédé selon la revendication 9, **caractérisé en ce que** l'on chauffe la ou les zones les plus froides de l'ensemble de filtration (1).

11. Procédé de mise en oeuvre selon la revendication 9, **caractérisé en ce que** l'on chauffe la ou les zones les plus chaudes de l'ensemble de filtration (1).

12. Procédé de mise en oeuvre selon l'une quelconque des revendications 7 à 11, **caractérisé en ce que** l'on associe à l'un au moins desdits éléments de filtration (11, 12, 13) un moyen de vannage (31, 32, 33) afin d'isoler ledit élément.

13. Procédé de mise en oeuvre selon l'une quelconque des revendications 7 à 12, **caractérisé en ce que** le chauffage est opéré sur une zone de filtration où l'encrassement est plus favorable à la régénération.

14. Procédé de mise en oeuvre selon l'une quelconque des revendications 7 à 13, **caractérisé en ce que** la puissance électrique consommée dépend des ressources électriques disponibles.

15. Procédé selon l'une quelconque des revendications 7 à 14, **caractérisé en ce que** l'on active sélectivement le ou les éléments résistifs en fonction de certaines conditions de fonctionnement du moteur.

16. Procédé selon la revendication 15, **caractérisé en ce que** l'on active sélectivement le ou les éléments résistifs en fonction de la position de la pédale d'accélération.

17. Procédé selon la revendication 16, **caractérisé en ce que** l'on désactive les éléments résistifs lorsque la pédale d'accélération commande une accélération maximale.

## Patentansprüche

1. Filtereinheit zur Nachbehandlung von Dieselmotorauspuffgasen, die eine Filtrieranordnung (1) umfasst, welche umfasst:
- wenigstens ein Filtrierelement (11, 12, 13);
- wenigstens ein Widerstandselement (3) zum Heizen einer Zone (121, 122, 123) eines Filtrierelements;
- ein Mittel zur Bestimmung der Verunreinigung der Filtrieranordnung (1);
**dadurch gekennzeichnet, dass** sie umfasst:
- ein Regelungsmittel (5) zur unabhängigen Steuerung jedes der Widerstandselemente gemäß der Verunreinigung der Filtrieranordnung (1);
- ein Mittel zur Bestimmung der verfügbaren Leistung , wobei dieses Mittel dem Regelungsmittel (5) zugeordnet ist.

2. Filtereinheit nach Anspruch 1, **dadurch gekennzeichnet, dass** das oder die Widerstandselemente (3) von Spiralen aufweisen, wobei jede um eine Zone (121, 122,...) eines Filtrierelements (11, 12, 13) gewickelt ist.

3. Filtereinheit nach einem der vorhergehenden Ansprüche, **dadurch gekennzeichnet, dass** jedes Widerstandselement eine gegenüber der verfügbaren elektrischen Gesamtleistung schwache Leistung aufweist.

4. Filtereinheit nach einem der vorhergehenden Ansprüche, **dadurch gekennzeichnet, dass** sie im übrigen wenigstens einen Temperatursensor umfasst.

5. Filtereinheit nach einem der vorhergehenden Ansprüche, **dadurch gekennzeichnet, dass** sie im übrigen wenigstens ein Ventilmittel (31, 32, 33) umfasst, das einem Filterelement (11, 12, 13) zugeordnet ist.

6. Filtereinheit nach einem der vorhergehenden Ansprüche, **dadurch gekennzeichnet, dass** sie im übrigen ein Mittel zur Bestimmung der Gaspedalstellung umfasst, das dem Regelungsmittel (5) zugeordnet ist.

7. Verfahren zur Umsetzung einer Filtereinheit zur Nachbehandlung von Dieselmotorauspuffgasen, die eine Filtrieranordnung umfasst, wobei das Verfahren darin besteht,
- die Filtrieranordnung in mehrere Filtrierelemente (11, 12, 13) zu teilen;
- wenigstens eines der Filtrierelemente (11, 12, 13) mit wenigstens einem Widerstandselement (3) zur Sicherstellung einer lokalen Erwärmung des Filtrierelements auszurüsten;
- die Verschmutzung in der Filtrieranordnung (1) zu bestimmen;
**dadurch gekennzeichnet, dass** es darin besteht,
- die verfügbaren elektrischen Ressourcen im Fahrzeug einzuschätzen;
- das oder die Widerstandselemente in Abhängigkeit, insbesondere von der ermittelten Verschmutzung und der Elektrischen Leistung, aufgrund des Regelungsmittels selektiv zu aktivieren.

8. Verfahren zur Umsetzung nach Anspruch 7, **dadurch gekennzeichnet, dass** die verschiedenen Zonen nacheinander erhitzt werden.

9. Verfahren zur Umsetzung nach einem der Ansprüche 7 oder 8, **dadurch gekennzeichnet, dass** es im übrigen darin besteht, die Temperatur an verschiedenen Punkten der Filtrieranordnung (1) zu bestimmen.

10. Verfahren zur Umsetzung nach Anspruch 9, **dadurch gekennzeichnet, dass** die kälteste(n) Zone(n) der Filtrieranordnung (1) erwärmt werden.

11. Verfahren zur Umsetzung nach Anspruch 9, **dadurch gekennzeichnet, dass** die wärmste(n) Zone(n) der Filtrieranordnung (1) erwärmt werden.

12. Verfahren zur Umsetzung nach einem der Ansprüche 7 bis 11, **dadurch gekennzeichnet, dass** wenigstens einem der Filtrierelemente (11, 12, 13) wenigstens ein Ventilmittel (31, 32, 33) zugeordnet wird, um das Element zu isolieren.

13. Verfahren zur Umsetzung nach einem der Ansprüche 7 bis 12, **dadurch gekennzeichnet, dass** die Heizung an einer Filtrierzone betrieben wird, wo die Verschmutzung am günstigsten für die Regenerierung ist.

14. Verfahren zur Umsetzung nach einem der Ansprüche 7 bis 13, **dadurch gekennzeichnet, dass** die verbrauchte elektrische Leistung von den verfügbaren elektrischen Ressourcen abhängt.

15. Verfahren zur Umsetzung nach einem der Ansprüche 7 bis 14, **dadurch gekennzeichnet, dass** das oder die Widerstandselemente selektiv in Abhängigkeit von bestimmten Motorbetriebsbedingungen aktiviert werden.

16. Verfahren zur Umsetzung nach Anspruch 15, **dadurch gekennzeichnet, dass** das oder die Widerstandselemente selektiv in Abhängigkeit von der Gaspedalstellung aktiviert werden.

17. Verfahren zur Umsetzung nach Anspruch 16, **dadurch gekennzeichnet, dass** das oder die Widerstandselemente deaktiviert werden, wenn die Gaspedalstellung eine maximale Beschleunigung vorgibt.

## Claims

1. Filtration unit designed for post-treatment of the gases emitted in the exhaust of diesel engines comprising a filtration assembly (1) comprising:
- at least one filtration element (11, 12, 13);
- at least one resistance element (3) designed to heat a zone (121, 122, 123) of a filtration element;
- a means of determining the fouling of said filtration assembly (1);
**characterised in that** it comprises:
- a control means (5) designed to operate each of said resistance elements independently according to the fouling of the filtration assembly (1);
- a means designed to determine the available power, said means being associated with the control means (5).

2. Filtration unit according to claim 1, **characterised in that** the resistance element or elements (3) take the form of coils each wound around a zone (121, 122 ...) of a filtration element (11, 12, 13).

3. Filtration unit according to any one of the preceding claims, **characterised in that** each resistance element exhibits a low power compared with the total available electrical power.

4. Filtration unit according to any one of the preceding claims, **characterised in that** it additionally comprises at least one temperature sensor.

5. Filtration unit according to any one of the preceding claims, **characterised in that** it additionally comprises at least one isolating means (31, 32, 33) associated with a filtration element (11, 12, 13).

6. Filtration unit according to any one of the preceding claims, **characterised in that** it additionally comprises a means for detecting the position of the accelerator pedal, associated with the control means (5).

7. Method for implementing a filtration unit designed for post-treatment of the gases emitted in the exhaust of diesel engines comprising a filtration assembly, said method consisting in
- dividing the filtration assembly into a plurality of filtration elements (11, 12, 13) ;
- equipping at least one of the filtration elements (11, 12, 13) with at least one resistance element (3) designed to provided local heating of said filtration element;
- detecting the fouling of the filtration assembly (1) ;
**characterised in that** it consists in
- evaluating the electrical resources available in the vehicle;
- selectively activating the resistance element or elements as a function in particular of the fouling detected and the electrical power, by virtue of a control means.

8. Method of implementation according to claim 7, **characterised in that** the different zones are heated one after the other.

9. Method according to any one of claims 7 or 8, **characterised in that** it additionally consists in detecting the temperature at different points of the filtration assembly (1).

10. Method according to claim 9, **characterised in that** the coolest zone or zones of the filtration assembly (1) are heated.

11. Method of implementation according to claim 9, **characterised in that** the hottest zone or zones of the filtration assembly (1) are heated.

12. Method of implementation according to any one of claims 7 to 11, **characterised in that** an isolating means (31, 32, 33) is associated with at least one of said filtration elements (11, 12, 13) in order to isolate said element.

13. Method of implementation according to any one of claims 7 to 12, **characterised in that** the heating is operated in a filtration zone in which the fouling is more favourable for regeneration.

14. Method of implementation according to any one of claims 7 1o 13, **characterised in that** the electrical power consumed depends on the available electrical resources.

15. Method according to any one of claims 7 to 14, **characterised in that** the resistance element or elements are activated selectively as a function of certain operating conditions of the engine.

16. Method according to claim 15, **characterised in that** the resistance element or elements are activated selectively as a function of the position of the accelerator pedal.

17. Method according to claim 16, **characterised in that** the resistance elements are deactivated when the accelerator pedal is demanding maximum acceleration.
